# EUROPÄISCHE PATENTSCHRIFT

(11) **EP 3 000 323 B1**
(45) Veröffentlichungstag und Bekanntmachung des Hinweises auf die Patenterteilung: **15.11.2017**
(21) Anmeldenummer: 15178165.5
(22) Anmeldetag: 24.07.2015
(51) Int. Cl.: A21D 8/02, A21C 1/00, A21C 1/02, B02B 1/08

(54) **VERFAHREN ZUR KONTINUIERLICHEN HERSTELLUNG UND PORTIONSWEISEN DOSIERUNG EINES MEHLVERKLEISTERUNGSPRODUKTES FÜR EINE BACKWARENTEIGKNETUNG**
METHOD FOR THE CONTINUOUS PRODUCTION AND PORTION-BASED METERING OF A FLOUR GELATINISATION PRODUCT FOR BAKED PRODUCT KNEADING
PROCEDE DE FABRICATION CONTINUE ET DE DOSAGE EN PORTIONS D'UN PRODUIT DE GELIFICATION DE FARINE POUR LE PETRISSAGE DE PATONS DE PRODUITS BOULANGERS

(30) Priorität: 24.07.2014 RU 2014130708
(43) Veröffentlichungstag der Anmeldung: 30.03.2016
(73) Patentinhaber: OOO INPK "Hlebotehnika", 445050 Tolyatti (RU); Slanin, Oleg K., 445044 Tolyatti (RU)
(72) Erfinder: SLANIN, Oleg K., 445044 Tolyatti (RU)
(74) Vertreter: Jeck, Anton

(56) Entgegenhaltungen:
- GB-A- 2 192 780
- RU-C2- 2 242 126
- RU-C2- 2 375 874
- US-A- 4 299 847
- US-A- 5 512 310
- DATABASE WPI Week 198723 Thomson Scientific, London, GB; AN 1987-160791 XP002755938, -& JP S62 96048 A (SHINAGAWA KOGYOSHO KK) 2. Mai 1987 (1987-05-02)

## Beschreibung

Die Erfindung betrifft ein Verfahren zur kontinuierlichen Herstellung und portionsweisen Dosierung von einem Mehlverkleisterungsprodukt für eine Backwarenteigknetung nach dem Oberbegriff des Anspruchs 1.

Die Erfindung bezieht sich auf die Lebensmittelindustrie und insbesondere auf die Backwarenproduktion. Sie ist für die Produktion von Brot-, Gebäck- und Brötchenwaren vorgesehen und kann auch zur Herstellung von anderen Backwarenarten verwendet werden.

Aus dem Stand der Technik ist ein Verfahren zur Herstellung von dickflüssigen Brühstücken für Teig- und Brotwaren bekannt. Das Verfahren wird portionsweise in einem Trog einer Teigknetmaschine ausgeführt. Dafür werden 10 bis 20 % von Mehl und Heißwasser in einem Verhältnis zwischen 1:1,2 und 1:1,6 mit einer Temperatur zwischen 75 und 98 °C in den Bottich gefüllt und vermischt. Dabei wird die Oberfläche der vermischten Brühmasse zugleich belüftet [1]. Der Zweck des Brühens ist, ein dickflüssiges Mehlverkleisterungsprodukt zu bekommen, worin sich die gesamte Mehlstärke beim Kontakt zwischen Mehl und Heißwasser in Bemessungsverhältnissen hinsichtlich ihrer Masse und Temperaturen hydrolysiert hat. Dabei entsteht ein Kolloid, das die Teigstruktur festhält. Bei Wasser- und Temperaturmangel bilden sich jedoch neben dem Kolloid auch gequollene Stärkekörner in der Brühmasse und bei zunehmender Temperatur des Heißwassers auch Stärke-Pentosan-Schleime. Die Stärke-Pentosan-Schleime machen das Verkleisterungsprodukt und dann den Teig besonders klebrig, was gewisse Probleme beim Teigformen bereitet. Bei einer gewerblichen Umsetzung dieses Verfahrens müssen alle verfahrenstechnischen Schritte - nämlich Beschicken, Mischen und Brühen (Abbrennen) mit der Herstellung der «Anfangsbrühmasse» («Anfangsbrandmasse») und anschließend der Verkleisterung, der Verzuckerung, der Homogenisierung und der Abkühlung - im Zeitrahmen einer Teigtrog-Durchlaufzeit gemäß einem vorgeschriebenen Produktionsablauf liegen. Danach wird die im Trog vorbereitete Masse des Verkleisterungsprodukts durch weitere Teigzutaten ergänzt, und der Teig wird geknetet.

Dieses Verfahren ist bei seiner gewerblichen Umsetzung dadurch bemängelt, dass es so gut wie unmöglich ist, bei der Füllung der berechneten Heißwassermenge mit einer Wasser-Solltemperatur in die berechnete Mehlmenge im großen und kalten Metalltrog die Wasser-Solltemperatur zu erhalten und die berechneten Wasser-Mehl-Verhältnisse an jeder Stelle (in jedem Punkt) der vermischten Masse sicherzustellen. Aus diesem Grund ist man gezwungen, die Heißwassertemperatur wesentlich zu erhöhen, um die benötigte Kolloidmenge im Verkleisterungsprodukt erreichen. Das führt zu einer erhöhten Klebrigkeit und Inhomogenität des Verkleisterungsprodukts, denn in der aufgebrühten Masse bilden sich neben dem benötigten Kolloid noch größere Mengen von Stärke-Pentosan-Schleimen und Sinteragglomeraten aus zusammengeklebten gequollenen Stärkekörnern. Es ist nicht möglich, diese in der zähen Masse des gemischten Teigs homogen zu verteilen, um die maximale Teig- und dann die Krumenqualität zu erreichen. Im Endeffekt gibt es Anhaftprobleme beim Formen und Rundwirken der Teigstücke. Die fertigen Brot-, Gebäck- und Brötchenwaren bekommen ungleichmäßig gefärbte und unebene Oberkrusten und eine ungleichmäßige Krumenstruktur.

Der nächstkommende Stand der Technik und der Prototyp ist ein Verfahren [2] zur kontinuierlichen Herstellung des Brühstücks für die Teig- sowie die Brot-, Gebäck- und Brötchenwarenproduktion. Bei diesem Verfahren werden 10 bis 20% von dem in der Rezeptur vorgeschriebenen Mehl sowie dem Heißwasser mit einer Temperatur zwischen 75 - 98 °C in einem Mehl-Wasser-Verhältnis zwischen 1,0:1,0 und 1,0:1,2 kontinuierlich aufgegeben und vermischt. Dadurch entsteht eine Anfangsbrühmasse mit einer Temperatur zwischen 61 und 62 °C. Danach folgt ihre Entfeuchtungskühlung und Oxidation mittels Lufteinblasung bei kontinuierlichem Mischen. Dabei werden folgende Phasen durchlaufen: Verkleisterung, Verzuckerung, enzymatische Behandlung und abschließende Homogenisierung, wobei die Masse mittels einer Extrudierschnecke über ein Kühlrohr für die Teigknetung umgepumpt wird. Die Teigknetung erfolgt in einer kontinuierlichen Verkleisterungskammer. Diese Maschine enthält einen auf einem Rahmen aufgestellten Knetbottich mit einem System von Trennwänden und Scherteilen für die Mischmasse und eine Schaufelwelle, einen Mehldosierer mit kontinuierlicher und regelbarer Mehlförderung, eine kontinuierliche Heißwasserversorgungseinheit, ein Belüftungssystem für die im Knetbottich gemischte Brühmasse, eine Auslaufstation und ein Ausgabekühlrohr.

Bei der Umsetzung in die Produktion des Prototypverfahrens zur Herstellung der Anfangsbrühmasse mit einer Temperatur von 61 ± 1 °C muss die Summe der Mehl- und Heißwassertemperaturen bei ihrem Erstkontakt innerhalb von 107 ± 3 °C liegen. Gemäß dieser Regel wird die erforderliche Heißwassertemperatur je nach der Ist-Temperatur des zu verkleisternden Mehls festgelegt. Unter Realproduktionsbedingungen kann die Temperatur des in die Maschine geförderten Mehls zwischen +10 °C und +30 °C variieren. Die entsprechenden Heißwassertemperaturen müssen zwischen 75 und 97 °C liegen. Steigt jedoch die Heißwassertemperatur über 75 °C und höher, so nimmt der Pentosanschleimanteil im gebildeten Verkleisterungsprodukt zu. Das führt zu einer Erhöhung der Klebrigkeit des Verkleisterungsprodukts und des damit hergestellten Teigs. Die erhöhte Teigklebrigkeit erschwert es ihrerseits, dass die maximale Teigfeuchtigkeit und Brotfrische erreicht werden. Bei einer Wassertemperatur von 75 °C und höher beschleunigen sich zugleich die Härtebildnerausfällungsvorgänge. Das bereitet zusätzliche Probleme, wie das Bewachsen der Rohrleitungen und der Wasseraufbereitungsgeräte, und setzt eine regelmäßige Reinigung der Wasseraufbereitungsanlage voraus.

Nach dem Prototypverfahren werden Mehl und Heißwasser in Bemessungsverhältnissen hinsichtlich ihrer Massen und Temperaturen in die Vorzone des Knetbottichs der Maschine zum Mischen und Brühen gefördert. Das Wasser fließt dabei ununterbrochen und kommt sofort in die zu mischende relativ kalte Brühmasse. Das Mehl wird mittels einer Schnecke eines Mehlspeiseapparats über einen Einführungskanal gefördert, ungleichmäßig daraus hinausgestoßen und ebenfalls in die Mischmasse geschüttet. Im Ergebnis kommt zuerst der primäre Kontakt zwischen Heißwasser und der Brühmasse zustande und erst danach zwischen dem Heißwasser und dem eingehenden Trockenmehl. Somit unterscheiden sich die Ist-Verhältnisse zwischen Mehl und Heißwasser im Kontaktbereich von den Bemessungsverhältnissen um das Vielfache. Darum muss das Heißwasser um 5 - 7 °C zusätzlich nacherwärmt werden, um die erforderliche Temperatur der Primärbrühmasse zu erreichen. Im Ergebnis bilden sich neben dem verfahrenstechnisch benötigten Kolloid noch vergrößerte Mengen von Sinteragglomeraten aus gequollenen Stärkekörnern im Verkleisterungsprodukt, die mittels Pentosan-Schleimen zusammengeklebt sind. Das macht das Verkleisterungsprodukt und den damit hergestellten Teig klebrig, schafft Probleme beim Teigformen und verhindert, dass die maximalen Teigfeuchtigkeitswerte und Frischhaltungszeiten der Waren erreicht werden:
- Die Primärmisch- und -brühzone befindet sich im gemeinsamen durchblasbaren Raum des Knetbottichs und ist somit für die Wirkung der Luftwirbel zugänglich. Diese zerstäuben die nicht durchgerührten Trockenmehlreste und kühlen die Brühstücksmasse bereits während ihrer Bildung ab. Aus diesem Grund muss die Heißwassertemperatur wieder erhöht werden, um die Soll-Temperatur der Anfangsbrühmasse zu erreichen. Das führt wiederum zu einer erhöhten Klebrigkeit des Verkleisterungsprodukts.
- Bei der Teigführung für Backwaren wird das rezepturmäßige Öl zusammen mit den übrigen Zutaten unmittelbar vor dem Kneten in den Trog aufgegeben. Dadurch ist es nicht möglich, seine feine und homogene Verteilung in der zähen Teigmasse zu erreichen.
- Das Belüftungssystem ist als ein geschlossenes System ausgebildet und ist mit Kanälen versehen, damit die Außenluft in den Knetbottichraum eintreten und die Abluft daraus in einen freistehenden großen Entstaubungsschrank austreten kann. Der Entstaubungsschrank enthält dabei ein System von Staubsammlern. Die Luftzufuhr wird mit Hilfe eines freistehenden großen und leistungsstarken Radialgebläses sichergestellt.
- Die Außenluft kommt vom Gebläse in den abgeschlossenen feuchten Knetbottichraum und nimmt diese Feuchte auf. Somit erreicht die bereits feuchte Luft die Oberfläche der angeblasenen Masse. Das vermindert die Effektivität der Verdampfung, der Abkühlung und der Oxidation der Masse. Darüber hinaus entsteht ein Überdruck und ein Feuchteüberschuss in diesem geschlossenen System. Das vermindert ebenfalls die Verdampfungs- und die Abkühlungseffektivität und bewirkt eine Feuchtigkeitsausscheidung auf der Innenfläche des Schauglases im Knetbottichdeckel. Dadurch ist es nicht mehr möglich, die Konsistenz des Verkleisterungsprodukts während seiner Vermischung visuell zu prüfen und die Bildung der "Anfangsbrühmasse" ggf. schnell anzupassen.
- Eine ausgangsseitige Extrudierschnecke ist für eine bestimmte Konsistenz und Massengeschwindigkeit des Verkleisterungsprodukts ausgelegt und gefertigt und dreht mit einer konstanten Drehzahl. Dadurch ist es nicht möglich, die Massenförderungsgeschwindigkeit und die Maschinenleistung wesentlich zu verändern. Um die Maschinenleistung zu ändern, müssen die Extrudierschnecke und ihr Antrieb ausgetauscht werden. Dafür muss die Produktion gestoppt und die Baugruppe komplett ausgebaut und ausgetauscht werden.
- Die Schaufelwelle wird durch einen Getriebemotor und Riementrieb angetrieben. Steigt die Leistung und die Wellenbelastung an, so kommt es zu einem Riemenschlupf an den Antriebsscheiben und einem Wellendrehzahlabfall. Das verursacht Mischeffektivitätsverluste und setzt voraus, dass die Riemen ständig nachgespannt und ausgetauscht werden müssen. Die erhöhte Riemenspannung erhöht ihrerseits die Querbelastung der Traglager und verkürzt ihre Standzeit.
- Das kontinuierlich hergestellte Verkleisterungsprodukt wird über ein Kühlrohr in einen Speicherbehälter (einen Trog) gefördert und von hier aus für die portionsweise Teigknetung mit der Hand entnommen, dosiert und samt den übrigen Zutaten in den Teigknettrog (Maschine) aufgegeben.
- Während der Sammlung im Speicherbehälter (Trog) kommt die Strukturierung (Vernetzung) des Verkleisterungsprodukts zustande. Es erstarrt zu einer unbeweglichen Masse, die sich sehr schwer entnehmen, dosieren und in dem zu knetenden Teig verteilen lässt. Deswegen nimmt die Aufgabe der jeweiligen Portion des Verkleisterungsprodukts ziemlich viel Zeit in Anspruch, und es bleibt wesentlich weniger Zeit für den eigentlichen Knetvorgag übrig.

Das Prototypverfahren hat folgende Mängel:
- Die hohe Heißwassertemperatur, wodurch das Verkleisterungsprodukts und dann der Teig klebrig wird.
- Es ist kein kontinuierlicher und gleichmäßiger primärer Kontakt zwischen dem geförderten Trockenmehl und dem Heißwasser in Bemessungsverhältnissen möglich, um die Soll-Temperatur und -Qualität der Anfangsbrühmasse und dann des -Verkleisterungsprodukts, des Teigs und der Krume zu erreichen.
- Aufgrund der vorhandenen Luftwirbel wird Mehlstaub gebildet und die Brühmasse bereits in der Primärmisch- und -brühzone gekühlt. Folglich muss das Heißwasser zusätzlich erhitzt werden. Das verursacht eine erhöhte Klebrigkeit des Verkleisterungsprodukts, welche es unmöglich macht, die maximale Teigfeuchtigkeit und die Verlängerung der Frischhaltungszeit der Krume zu erreichen.
- Es ist nicht möglich, eine feine und homogene Verteilung des rezepturmäßigen Öls in der zähen Masse des zu knetenden Teigs zu erreichen.
- Es ist nicht möglich, die ununterbrochene Konsistenzkontrolle des Verkleisterungsprodukts während der Lufteinblasung und Vermischung vorzunehmen und den Bildungsvorgang der Anfangsbrühmasse eventuell schnell anzupassen.
- Eine unnötige Kompliziertheit, Materialintensität, zu große Abmessungen und zu hohe Leistungsaufnahme des geschlossenen Lüftungssystems, ungenügender Wirkungsgrad der Entfeuchtungskühlung.
- Es ist nicht möglich, die Fördergeschwindigkeit des Verkleisterungsprodukts schnell zu regeln und die Maschinenleistung anzupassen sowie das Werkzeug der Extrudierschnecke in der Ausgabestation ohne Produktionsstopp schnell auszutauschen.
- Eine Unzuverlässigkeit der Riemenantriebe der Schaufelwelle und der Maschinenpumpe, wodurch die Wellendrehzahl unregelmäßig und die Mischintensität der Masse im Knetbottich ungleichmäßig ist. Die Traglager fallen frühzeitig aus.
- Eine zähe Konsistenz des Verkleisterungsprodukts, Zeitverluste während der manuellen portionsweisen Aufgabe und Verkürzung der Teigknetdauer erlauben es nicht, eine feine und homogene Verteilung des Verkleisterungsprodukts im Teigkern sicherzustellen und die maximale Qualität der Fertigwaren zu erreichen.

Durch DATABASE WPI Week 198723; Thomson Scientific, London, GB; AN 1987-160791 - & JP S62 96048 A (SHINAGAWA KOGYOSHO KK) 2. Mai 1987; XP002755938 ist ein kontinuierliches Verfahren bekannt, um Getreide zu kochen. Dabei wird Getreide mit Heißwasser vermengt und in der Mischung anschließend eingeweicht. Dabei sind mehrere parallele Bottiche vorgesehen, in denen das Einweichen stattfindet. Die Zudosierung von Körnern sowie Heißwasser erfolgt kontinuierlich nach Bedarf.

Durch US 4,299,847 ist ein Verfahren zur Behandlung von Getreidekörnern bekannt, welche dann nach der Behandlung Backwaren zugegeben werden können. Die Getreidekörner werden hierbei für eine bestimmte Zeit in einer Einweichlösung aus Wasser und konzentriertem Traubensaft eingeweicht. Die Temperatur der Einweichlösung wird anfangs zwischen 22°C und 28°C gehalten.

Es ist Aufgabe der Erfindung,
a) die Heißwassertemperatur und Klebrigkeit des hergestellten Verkleisterungsprodukts zu vermindern,
b) den kontinuierlichen primären Kontakt zwischen Trockenmehl und Heißwasser in solchen Bemessungsverhältnissen zu ermöglichen, die erforderlich sind, um die optimale Temperatur und Qualität der Anfangsbrühmasse und weiterhin des Verkleisterungsprodukts, des Teigs und der Fertigwaren zu erreichen,
c) Luftströmungen aus der Primärmisch- und -brühzone auszuschließen und dadurch zusätzlich Heißwassertemperatur und Klebrigkeit des Verkleisterungsprodukts und des Teigs zu vermindern, um die maximale Teigfeuchtigkeit und die Frischhaltungsdauer der Krume bei Fertigwaren zu erreichen und den Mehlstaub und die Nutzung der Staubsammeleinrichtungen zu vermeiden,
d) eine feine und homogene Verteilung des rezepturmäßigen Öls in der gemischten Teigmasse sicherzustellen, um ihre Klebrigkeit endgültig auszuschließen, Frischhaltungszeiten zu verlängern und die Aroma- und Geschmackseigenschaften der Fertigwaren zu verbessern,
e) den Nutzeffekt der Entfeuchtungskühlung zu steigern und die laufende Überwachung der Konsistenz des gemischten Verkleisterungsprodukts sowie die eventuelle schnelle Anpassung des Herstellungsablaufs der Anfangsbrühmasse zu ermöglichen,
f) die Konstruktion zu vereinfachen, den Materialaufwand, die Abmessungen und den Energieverbrauch des Belüftungssystem zu vermindern,
g) eine schnelle Regelung der Fördergeschwindigkeit des Verkleisterungsprodukts und die Anpassung der Maschinenleistung sowie den Austausch des Werkzeugs der Ausgabestation ohne Produktionsstopp zu ermöglichen,
h) die Zuverlässigkeit der Antriebe, eine stabile Drehzahl der Schaufelwelle und der Pumpe sowie die Mischintensität im gesamten Bereich der Maschinenleistungen sicherzustellen und
i) die Aufnahme des kontinuierlich zugeführten Verkleisterungsprodukts und seine portionsweise Dosierung im flüssigen Zustand sicherzustellen, um die maximale Homogenität und Feinheit bei der Verteilung des Verkleisterungsprodukts in der gemischten Teigmasse zu erreichen.

### Die gestellte Aufgabe wird wie folgt gelöst:

Das Verfahren zur kontinuierlichen Herstellung und portionsweisen Dosierung des Mehlverkleisterungsprodukts zur Brotwarenteigknetung sieht kontinuierliche Zuführung von 10 - 20 % des rezepturgemäßen Mehls und Mischung mit Heißwasser in einem Mehl-Wasser-Verhältnis zwischen 1,0:1,0 und 1,0:1,4 vor. Dabei wird die Anfangsbrühmasse mit einer Temperatur zwischen 61 ± 1 °C gebildet, entfeuchtet und mittels Lufteinblasung beim kontinuierlichen Mischen oxidiert. Es werden folgende Phasen durchgeführt: Verkleisterung, Verzuckerung, enzymatische Behandlung, Homogenisierung, Weichmachen und Durchpumpen des hergestellten Verkleisterungsprodukts über ein Kühlrohr für die Teigknetung, die in einer Verkleisterungsmaschine durchgeführt wird. Die Verkleisterungsmaschine enthält einen auf einem Rahmen aufgestellten Knetbottich mit einem System von Trennwänden und Scherteilen für die Mischmasse, eine Schaufelwelle, einen Wellenantrieb, einen Mehldosierer mit regelbarer kontinuierlicher Mehlzufuhr, einen Mehleinspeisekanal, eine Versorgungseinheit, um Heißwasser mit einer Solltemperatur und -geschwindigkeit der Heißzone zum primären Mischen und Brühen kontinuierlich zuzuführen, ein Massenbelüftungssystem, eine Auslaufdruckstation und ein Ausgabekühlrohr.

Das Verfahren zeichnet sich dadurch aus,
- dass die Heißwassertemperatur innerhalb von 65 ± 5 °C aufrechterhalten wird, dass der Mehldosierer und der Mehleinspeisekanal mit einer externen elektrischen Heizung und Wärmeisolierung versehen ist und dass die Temperatur des aufzubrühenden Mehls innerhalb von 40 ± 5 °C aufrechterhalten wird;
- dass die heiße Primärmisch- und -brühzone des belüfteten Knetbottichraums durch eine Trennwand getrennt und mit einem separaten Deckel mit einer Längsnut abgeschlossen wird und dass die Knetbottichwände und der -boden mit elektrischer Heizung und Wärmeisolierung über die Länge der Heißzone versehen sind;
- dass der Mehleinspeisekanal mit polierter Innenfläche ausgebildet und unter einem spitzen Winkel zur Knetbottichstirnwand aufgebaut wird und dass der Mehldosierer auf einer Höhe angeordnet wird, die dafür ausreicht, eine gleitende fallende Mehlströmung im Einspeisekanal zu erzeugen;
- dass Mehl und Heißwasser in Form von gerichteten Strahlen zum primären Mischen und Brühen in Bemessungsverhältnissen hinsichtlich ihrer Massen und Temperaturen aufgegeben werden, wobei diese Strahlen in einem Sollpunkt des primären Kontakts in einem trockenen Bereich des aufgewärmten Knetbottichbodens zusammentreffen;
- dass das Heißwasser der Heißzone über einen Stutzen mit einem regelbaren Ansatzstück zugeführt wird, welches den Strahl zum Sollpunkt des primären Kontakts ausbildet und ausrichtet;
- dass die kontinuierlich entstehenden Primärbrühmassen mittels Wellenschaufeln vom Kontaktpunkt zum gemeinsamen Kern der Anfangsbrühmasse hin «verschoben» (gebracht) und danach in der heißen Zone durchgemischt werden, bis ein homogener Zustand erreicht wird, wobei eine Soll-Temperatur aufrechterhalten wird;
- dass die durchgemischte Anfangsbrühmasse aus der Heißzone in den belüfteten (luftbeblasenen) Bereich des Knetbottichs über den erwärmten Boden des Knetbottichs unter der Schubwirkung der Wellenschaufeln unterhalb der unteren Kante der die Heißzone abtrennenden Trennwand gefördert wird;
- dass der Bildungsvorgang der Anfangsbrühmasse und des Verkleisterungsprodukts je nach Ergebnissen der visuellen Überwachung der Konsistenz der entstehenden und der zu vermischenden Masse schnell angepasst werden kann, wobei die Überwachung über die Längsnut im Deckel des Heißraums und über ein den belüfteten Bereich des Knetbottichs abdeckendes Gitter erfolgt;
- dass stabile Bemessungs-Drehzahlen der Schaufelwelle und der Maschinenpumpe sowie Intensität der Massenvermischung dank der Anwendung von Kettenantrieben erreicht werden;
- dass die rezepturmäßige Ölmenge in die vermischte heiße Anfangsbrühmasse am Austritt in den belüfteten Knetbottichbereich kontinuierlich dosiert wird;
- dass die vermischte Brühmasse über einen geneigten über die gesamte Knetbottichlänge ausgebildeten Schlitzkanal mit gerichteter Querluftströmung belüftet wird, die von einem Axialventilator kommt, dass der Axialventilator in ein auf dem Knetbottich aufgestellten Luftrohr eingebaut ist und dass die Abluft über ein Schutzgitter des Knetbottichs frei abgeleitet wird;
- dass die Auslaufstation der Maschine als Bestandteil eines Auslaufbunkers des Knetbottichs und einer damit verbundenen Hochdruckschraubenpumpe in einer elastischen Fassung mit Planetenbewegung der Arbeitsschraube und mit frequenzgeregelten Drehzahlen und Leistung ausgebildet ist und dass am Austritt der Auslaufstation ein schwenkbarer Bogen mit Hilfe eines Schnellentkopplungselements angebaut wird, der die Pumpe mit einem Ausgabekühlrohr verbindet, welches das Verkleisterungsprodukt der Teigknetung zuführt;
- dass die Aufnahme des kontinuierlich zugeführten Verkleisterungsprodukts und seine portionsweise Dosierung im flüssigen Zustand in der Teigknetmaschine mit Hilfe eines Speicherdosierers erfolgt, der einen Bunker, eine Schraubenpumpe, einen Strömungsschalter für das Verkleisterungsprodukt und ein Bedienpult mit einem Zeitgeber-Relais und automatischen Pumpenschaltern enthält;
- dass die berechnete Gabe (Solldosierung) des Verkleisterungsprodukts in die Teigknetmaschine aus dem Speicherdosierer mit Hilfe seiner Pumpe aufgegeben wird und zwar im Laufe einer Sollzeit, die am Relais des Bedienpults eingestellt wird, wobei das Verkleisterungsprodukt in die feuchte kontinuierlich gemischte Masse des Teighalbprodukts (Vorteig, Flüssigphase, primär gekneteter Teig) kommt, dass danach das gesamte Mehl und die Restzutaten aufgegeben werden und der Teig endgültig geknetet wird.

Das Übersichtsbild der Verkleisterungsmaschine ist den beiliegenden Zeichnungen zu entnehmen. Es zeigen:
- Fig. 1: den Längsschnitt,
- Fig. 2: den Querschnitt der Verkleisterungsmaschine und
- Fig. 3: das gerätetechnische Fließschema der Förderung des Verkleisterungs-produkts zur portionsweisen Teigknetung.

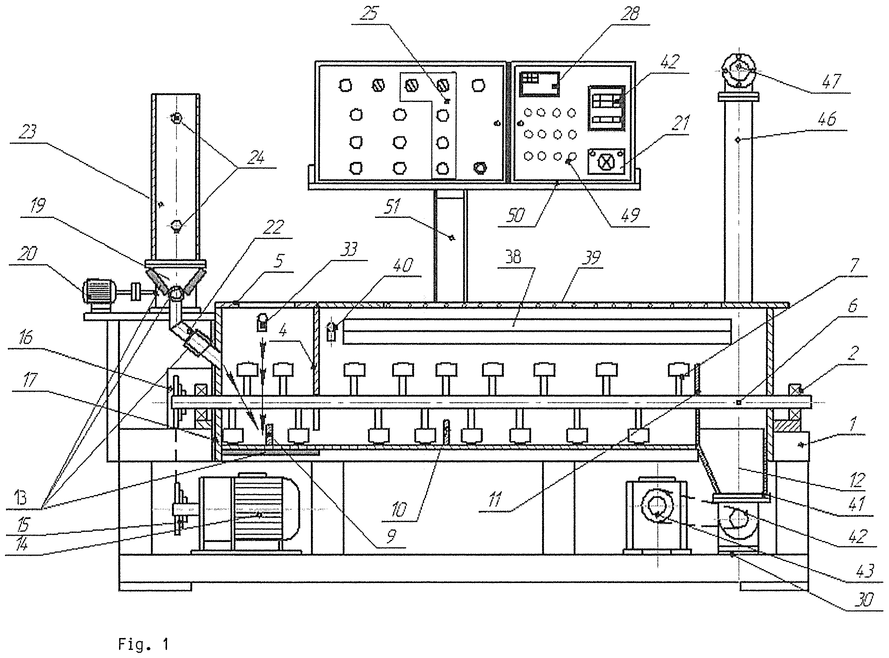

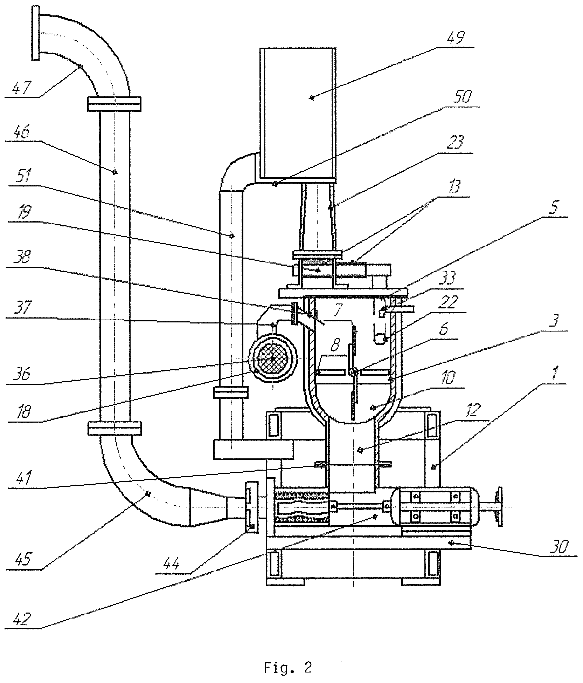

Die Verkleisterungsmaschine enthält (siehe das Übersichtsbild aus Fig. 1 und 2)
- einen auf einem Rahmen 1 aufgestellten Knetbottich 3 mit einer auf Lagerhalterungen 2 gelagerten Schaufelwelle 6 mit Schaufeln 7. Die Schaufelwelle 6 wird von einem Getriebemotor 14 mittels eines Kettentriebs 15 angetrieben. Der Kettentrieb 15 ist mit einer Abdeckung 16 geschlossen,
- einen durchsichtigen Mehlaufnahmebecher 23 mit Mehlfüllstandsgebern 24,
- einen Mehldosierer 19 mit einem Antrieb 20, der von einem Frequenzregler 21 gesteuert wird, und
- einen Mehleinspeisekanal 22.

In der Wandung eines Heißraums ist ein drehbarer Stutzen 33 eingebaut, um einen Heißwasserstrahl zu fördern, auszubilden und auszurichten. Die Heißwassertemperatur wird automatisch mit einem Temperaturmess- und -regelgerät 28 geregelt. Die Mehlförderung in den Mehlaufnahmebecher 23 wird von einer Regeleinheit 25 auf einem Bedienpult geregelt. Im Boden des Knetbottichs 3 sind Trennwände 9, 10, 11 eingeschweißt. An den Rändern des Knetbottichs 3 zwischen den Wellenschaufeln 7 sind Scherteile 8 angebaut, um die Masse durchzuschneiden. Quer über dem Knetbottich 3 ist eine Trennwand 4 ausgebildet, um die heiße Primärmisch- und - brühzone vom übrigen Knetbottich 3 zu trennen. Die Trennwand 4 lässt auch einen ausreichenden Raum zwischen dem unteren Rand und dem Boden übrig, um die Anfangsbrühmasse auszugeben. Auf dem Boden der Heißzone ist eine flache elektrische Heizung 13 angeordnet, die mit einem Thermoregler versehen ist. Die Heißzone des Knetbottichs 3 wird mit einem separaten Deckel 5 geschlossen. Der Deckel 5 hat eine Längsnut. Die Stirnwand, die Ränder und der Boden des Knetbottichs 3 sind an der Außenfläche der Heißzone mit einer Schicht 17 eines Wärmeisolierungsstoffs bedeckt. In unmittelbarer Nähe zur heißen Trennwand 4 ist ein Stutzen 40 eingebaut, um das rezepturmäßige Öl einzuführen.

Ein offenes Querbelüftungssystem für die vermischte Brühmasse enthält einen Axialventilator 18, der in die Stirnfläche eines Luftrohrs 36 eingebaut ist. Von dem Luftrohr 36 und tangential dazu wird ein Verteilerkanal 37 abgeleitet. Dem Verteilerkanal 37 entspringt ein ausgerichteter Schlitzkanal 38, der im Knetbottich 3 über seine gesamte Länge eingeschnitten ist. Der luftbeblasene Bereich des Knetbottichs 3 ist oben mit einem Schutzgitter 39 abgedeckt, um den Kontakt des Personals mit rotierenden Wellenschaufeln 7 zu vermeiden und dabei den freien Austritt der Abluft und die visuelle Überwachung der Konsistenz des vermischten Verkleisterungsprodukts nicht zu verhindern.

Am Ende des Knetbottichs 3 ist ein Auslaufbunker 12 ausgebildet, um das Verkleisterungsprodukt aufzunehmen und seinen Spiegelstand aufrechtzuerhalten. Unten am Auslaufbunker 12 ist eine Schraubenpumpe 42 mittels Flanschen 41 angeschlossen. Die Schraubenpumpe 42 ist auf einer Bühne 30 aufgestellt und mit einem Antrieb 43 versehen. Am Austritt der Schraubenpumpe 42 ist ein schwenkbarer Bogen 45 mit Hilfe einer schnell abnehmbaren Mutter (Schnellentkopplungsmutter) 44 befestigt. Der schwenkbare Bogen 45 dient dazu, das Ausgaberohr 46 an seiner Einbaustelle optimal auszurichten und mit einem oberen Bogen 47 zu verbinden. Der obere Bogen 47 wird an ein Kühlrohr angeschlossen, welches das Verkleisterungsprodukt der Teigknetung zuführt.

Die Steuerung erfolgt von einem gemeinsamen Bedienpult 49 aus, welches über der Maschine auf einer Platte 50 aufgebaut ist. Die Platte 50 ist auf einem Ständer 51 und einer Stütze 52 montiert, die mit dem Rahmengestell starr verschweißt ist.

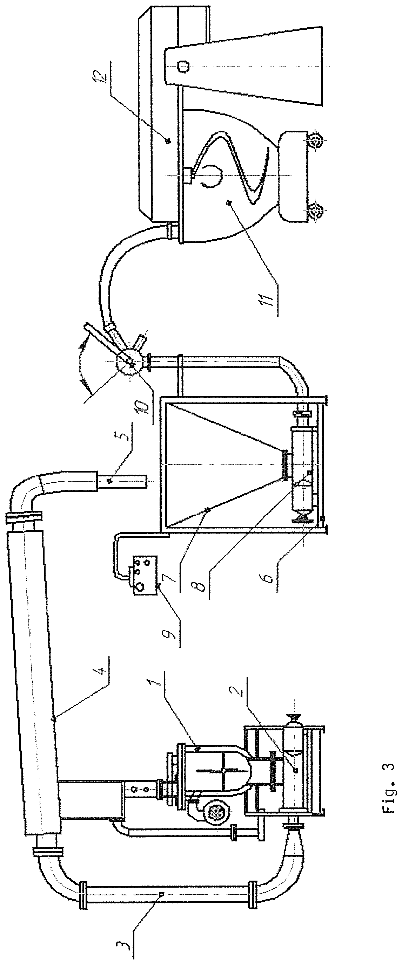

In unmittelbarer Nähe zur Teigknetmaschine 12 wird ein Speicherdosierer 6 gemäß dem Fließschema nach Fig. 3 angeordnet. Der Speicherdosierer 6 enthält einen Bunker 7, eine Schraubenpumpe 8 und einen Strömungsschalter 10. Der Strömungsschalter 10 ist vorgesehen, um die Verkleisterungsproduktströmung entweder in einen Trog 11 der Teigknetmaschine 12 oder in einen Hilfsbehälter zur Fördergeschwindigkeitsmessung oder in einen ausfahrbaren Trog zu transportieren.

Das Bedienpult 9 des Speicherdosierers hat ein Zeitgeber-Relais. Innerhalb einer vorgegebenen Zeit pumpt die Pumpe eine berechnete Menge (Sollmenge) des Verkleisterungsprodukts in den Trog hinein.

Das beanspruchte Verfahren wird unter Produktionsbedingungen wie folgt ausgeführt.
- Das Mehl kommt in den Mehlaufnahmebecher 23 und dann über den erwärmten Mehldosierer und den Einführungskanal. Dabei wird das Mehl auf eine Temperatur von 40 ± 5 °C erwärmt. Die Heißwassertemperatur wird dementsprechend am Bedienpult 49 eingestellt und innerhalb von 65 ± 5 °C aufrechterhalten.
- Der primäre Kontakt und das Brühen des Mehls erfolgt in der heißen Primärmisch- und -brühzone des Knetbottichs 3 mit beheiztem Boden. In dieser Zone wird eine stabile Temperatur und eine 100%ige Feuchtigkeit aufrechterhalten. Das erlaubt es, Wärmeverluste beim Brühen zu vermeiden und die Heißwassertemperatur zu minimieren. Diese ist erforderlich, um die Anfangsbrühmassentemperatur innerhalb von 61 ± 1 °C aufrechtzuerhalten, ihre Abkühlung auszuschließen und somit die Klebrigkeit des gebildeten Verkleisterungsprodukts zu minimieren.
- Danach erfolgen eine gleichmäßige strahlenartige Zufuhr, ein kontinuierlicher Primärkontakt und ein blitzartiges Brühen des Trockenmehls mit Heißwasser. Dabei entstehen lokale Primärbrühmassen. Diese werden von der Kontaktstelle in die gemeinsame Anfangsbrühmasse gebracht und durchgemischt. In dieser Anfangsbrühmasse bilden sich unter stabiler Temperatur und kräftiger Mischwirkung Amylopektin, aus dem Außenschalen der Stärkekörner bestehen, dickes Kolloid, und Amylose als Bestandteil des Inneren der Stärkekörner bildet lösliche Gele.
- Die Stirnwand und der daran angrenzende Heißbereich des Bodens des Knetbottichs 3 in der heißen Primärmisch- und -brühzone werden in einem trockenen Zustand aufrechterhalten und durch die erste Reihe der rotierenden Schaufeln 7 gegen zufällige Anhaftungen geschützt.
- Die nächste Reihe der Schaufeln 7 wird in der Ebene des Sollpunkts für den primären Kontakt angeordnet, um die entstehenden lokalen Primärbrühmassen von der Kontaktstelle in den durchgemischten Kern der Anfangsbrühmasse zu schieben.
- Die Anzahl der an der Welle in der Kontaktebene angeordneten Schiebeschaufeln 7 wird je nach der Maschinenleistung gewählt.
- Bei minimaler Mehlaufgabeleistung von 1 kg/Min. der Maschine und einer konstanten Wellendrehzahl von 1 U/Sek. wird eine Schiebeschaufel aufgebaut. Dabei treffen alle 17 g Trockenmehl 23 g Heißwasser pro Sekunde. Somit werden 40 g der Primärbrühmasse gebildet, die die Schiebeschaufel 7 pro jede einzelne Schaufelwellenumdrehung von der Kontaktstelle bringt.
- Somit wird pro eine Betriebsminute die gemeinsame Anfangsbrühmasse gebildet, die sich aus je 60 gleichen Primärbrühmassen zusammensetzt. Dabei haben diese Primärbrühmassen eine gleichmäßige quantitative und qualitative Zusammensetzung.
- Bei maximaler Mehlaufgabeleistung von 4 kg/Min der Maschine und bei Aufrechterhaltung der Wellendrehzahl von 1 U/Sek. werden 4 um 90 °Grad versetzte Schaufeln in der Schubebene an der Welle angeordnet. Dabei bleibt jede durch eine Schaufel verschobene Primärbrühmasse konstant und beträgt 40 g. Aber ihre Entstehungs- und Schubzeit macht jeweils ¼ Sek. aus. Die Qualität der Anfangsbrühmasse und dann des Verkleisterungsprodukts bleibt immer stabil.
- Der Vorgang der Bildung von lokalen Primärbrühmassen und ihrer Vereinigung zur gemeinsamen Anfangsbrühmasse wird über die Längsnut im Deckel des Heißraums beobachtet. Das Mischen und das Belüften werden über das Gitter des Knetbottichs 3 überwacht. Die eventuell benötigten Anpassungen werden je nach Ist-Konsistenz der Masse vorgenommen.
- Die optimalen Eigenschaften der Anfangsbrühmasse werden bei variabler Mehlqualität dadurch erreicht, dass die Massen- und Temperaturverhältnisse zwischen dem kontaktierenden Mehl und dem Heißwasser geregelt werden, wobei eine stabile Temperatur der Anfangsbrühmasse in der heißen Zone aufrechterhalten wird.
- In der isolierten Heißzone mit dem beheizten Boden werden Wärme- und Feuchteverluste vermieden. Deswegen wird das in jeder lokalen Primärbrühmasse gebildete Kolloid seiner Temperatur und Zusammensetzung nach identisch.
- Nach kräftiger Durchmischung und Homogenisierung in der heißen Zone wird die gemeinsame Anfangsbrühmasse in den belüfteten Knetbottichraum mittels Schubschaufeln 7 der Welle 6 über den erwärmten Boden des Knetbottichs 3 unter dem Rand der Trennwand 24 hinausgefördert.
- Die 100%ige Feuchtigkeit im Heißzonenraum, die kräftige Durchmischung und die Ausgabe der Brühmasse von unten sorgen dafür, dass Durchbrüche und Staubentwicklung der Trockenmehlreste ausgeschlossen sind.
- Bei weiterer Vermischung der Masse im belüfteten Raum des Knetbottichs 3 und unter der Einwirkung von Luftsauerstoff, Temperatur und den aktivierten mehleigenen amylolytischen Enzymen kommt eine teilweise Verzuckerung des löslichen Teils des Amylose-Gels zustande. Dabei bleibt die Hauptmasse des robusten Amylopektin-Kolloids erhalten. Die sich ständig entwickelnde vergrößerte und aktive Oberfläche der vermischten dickflüssigen Masse wird mit der Querluftströmung belüftet. Das führt dazu, dass die Verdampfung intensiviert wird, Wasserdämpfe von der Massenoberfläche entfernt werden, die Masse durch den Luftsauerstoff oxidiert wird, die Kleberstruktur verstärkt und die Masse mit Luftsauerstoff gesättigt wird. Dabei erfolgt die Entfeuchtungskühlung der Masse. Bei der Belüftung unter Raumtemperatur der ständig neu gebildeten Oberfläche der vermischten feuchten Masse wird bis zu 10 % der Feuchte verdampft, wodurch die Masse intensiv gekühlt wird.
- Die freie Abfuhr der Abluft von der Oberfläche sowie der Austritt der Abluft aus dem Knetbottich 3 bewirken eine ununterbrochene Frischluftzufuhr an die Oberfläche der Masse sogar bei minimalen von einem leistungsschwachen Axialventilator erzeugten Strömungsgeschwindigkeiten.
- Die Luftsauerstoffzufuhr an die sich immer neu entwickelnden aktiven Oberflächen der dickflüssigen Massen bewirkt eine katalytische Beschleunigung für Oxidations-, Verzuckerungs- und enzymatische Behandlungsprozesse des Stärkekolloids.
- Kühlt die Masse auf eine Temperatur unter 50 °C ab, so hört die Verzuckerung auf. Danach folgen solche Vorgänge wie Entfeuchtungskühlung, enzymatische Behandlung, Homogenisierung, oxidative Verfestigung des Klebers und Luftsauerstoffsättigung des Verkleisterungsprodukts.
- Die Luftzufuhrgeschwindigkeit wird mittels Drehzahlregelung des Ventilators eingestellt, so dass die Brühmassentemperatur im Knetbottich 3 für die enzymatische Behandlung und Oxidation optimal aufrechterhalten wird. Am Austritt des Knetbottichs 3 wird die Massentemperatur innerhalb von 34 ± 2 °C geführt.
- Das rezepturmäßige Öl wird in die Anfangsbrühmasse kontinuierlich gefördert, kräftig vermischt, dispergiert, emulgiert und im fertigen Verkleisterungsprodukt auf seiner Mikrostrukturebene verteilt. Das an aktiven Zentren vorhandene Öl führt dazu, dass die Klebrigkeit endgültig verschwindet und die Beweglichkeit des Verkleisterungsprodukts zunimmt.

Somit wird die ursprünglich zähe unbewegliche Anfangsbrühmasse der Mischwirkung von rotierenden Wellenschaufeln 7 und dazwischen eingebauten unbeweglichen Scherteilen 8 ununterbrochen ausgesetzt. Diese erzeugen Scherbewegungen der Massenschichten und beschleunigen den Wärme- und Massenaustausch. Letztendlich wird diese Anfangsbrühmasse am Ende des Knetbottichs 3 zu einem homogenen Verkleisterungsprodukt mit zähflüssiger Konsistenz. Diese ist dazu fähig, über eine Haupttrennwand des Knetbottichs 3 in den Auslaufbunker 12 und von da aus in die Einfüllöffnung der Schraubenpumpe 42 zu fließen. Sein Arbeitsorgan ist eine polierte Stahlschraube, die Planetenbewegungen in einer elastischen Fassung ausführt.
- Die Schraubenpumpe 42 der Maschine hat beim Durchpumpen des Verkleisterungsprodukts noch eine weitere dispergierende Funktion: Sie "zerdrückt" die in der Masse noch übrig gebliebenen Sinteragglomerate zwischen der Schraube und der Fassung und macht die Struktur des Verkleisterungsprodukts noch feiner, homogener und flüssiger.
   Im Auslaufbunker 12 des Knetbottichs 3 wird ein Soll-Füllstand des Verkleisterungsprodukts aufrechterhalten. Er sorgt für einen ständigen Saugdruck für die normale Pumpenfunktion. Die Fördergeschwindigkeit der Pumpe 42 wird mit Hilfe eines Frequenzreglers 43 so eingestellt, dass der Füllstand im Bunker 12 immer konstant bleibt. Das heißt, die Menge des hergestellten und im Bunker 12 eingehenden Verkleisterungsprodukts und die Menge des von der Pumpe 42 über ein Kühlrohr 11 für die Teigknetung durchgepumpten Produkts muss immer gleich sein.
- Wird die Maschinenleistung geändert, so wird neben der Änderung der Mehl- und Wasseraufgabe auch die Pumpendrehzahl angepasst und der ständige Füllstand der Masse im Bunker 12 wird kontrolliert.
- Der schwenkbare Bogen 45 mit dem Schnellentkopplungselement 44 ermöglicht es, das Werkzeug, und zwar die elastische Fassung der Pumpe 42, schnell und ohne jegliche Demontage der Ausgabestation und Produktionsstopp auszutauschen. Dafür wird nur das Schnellentkopplungselement 44 abgeschraubt, und der schwenkbare Bogen 45 wird entfernt. Somit wird der Auslaufteil der Pumpe 42 für den Fassungsaustausch zugänglich sein. Nach dem Fassungsaustausch wird die Montage der Fassung in umgekehrter Reihenfolge vorgenommen.
- Die Fassung wird innerhalb von nur einigen Minuten während einer normalen fertigungstechnischen Pause (Produktionsstopp) ausgetauscht.
- Beim Durchpumpen der Verkleisterungsproduktmasse über das Kühlrohr unter Hochdruck kommen ein zusätzliches gegenseitiges Durchdringen und eine Vereinigung des Stärkekolloids und des gequollenen Klebers zustande. Das bedingt die Verstärkung der strukturierenden Wirkung und der Formhaltungswirkung des Verkleisterungsprodukts im Teig. Während des Transports des Verkleisterungsprodukts durch das Kühlrohr fährt seine aerobe enzymatische Behandlung fort (dafür enthält das Verkleisterungsprodukt genug Luftsauerstoff, welcher bei der Belüftung und Mischung im Knetbottich 3 eingebunden worden ist).
- Das Verkleisterungsprodukt am Auslauf wird mittels geregelter Abkühlung des Kühlrohrs auf solche Temperaturen gebracht, die für die Teigknetung gemäß dem gültigen Verfahren akzeptabel sind (28 - 30 °C).
- Das gekühlte Verkleisterungsprodukt kommt aus dem Rohr 46 in den Bunker 12 des Speicherdosierers, an dessen Bedienpult 49 eine berechnete Zeit eingestellt wird, wie lange die Schraubenpumpe 42 die Sollmenge des Verkleisterungsprodukts in die Teigknetmaschine fördern soll.
- Die Schraubenpumpe 42 des Speicherdosierers, ähnlich wie die Pumpe der Verkleisterungsmaschine, verleiht dem Verkleisterungsprodukt beim Durchpumpen der Sollmenge zusätzliche Homogenität und Flüssigkeit, die für die feine Verteilung des Verkleisterungsprodukts in der Teigmasse vorausgesetzt wird.
- Das flüssige Verkleisterungsprodukt wird innerhalb von einigen Minuten (Sollzeit) unter ständigem Rühren in die feuchte Masse des Teighalbfabrikats (Vorteig, Sauerteig, primär gekneteter Teig) aufgegeben und gleichmäßig zuerst in ihrem Umfang verteilt. Dann werden die übrigen Zutaten und Mehl zugegeben, und schließlich erfolgt die Durchknetung, bis die Struktur des endgültigen Fertigteigs homogen ist. Die Taktzeit für das Kneten pro Teigtrog wird bei dieser Art und Weise der Verkleisterungsproduktzufuhr nicht verkürzt.

Bei der Durchführung des beanspruchten Verfahrens wird Folgendes erreicht:
- Die Mehltemperatur wird innerhalb von 40 ± 5 °C und die Heißwassertemperatur innerhalb von 65 ± 5 °C geführt.
- Der primäre Kontakt zwischen dem Trockenmehl und dem Heißwasser erfolgt unter Sollverhältnissen (unter berechneten Mehl-Teig-Verhältnissen), so dass die optimale Temperatur und die Qualität der Anfangsbrühmasse, des Verkleisterungsprodukts und dann des Teigs und der Krume der Backwaren erreicht werden.
- Die Durchdringung von Luftströmungen in die heiße Primärmisch- und - brühzone und die Senkung der Heißwassertemperatur sind erforderlich, um die Soll-Temperatur der Anfangsbrühmasse, den Verzuckerungsgrad, Oxidation, enzymatische Behandlung, Homogenisierung, geringere Klebrigkeit zu erreichen und die Staubbildung zu vermeiden.
- Vereinfachung der Konstruktion und kleinere Abmessungen der lufttechnischen Station der Maschine sowie mehrfache elektrische Leistungsreduzierung des Ventilators und Wirkungsgradsteigerung der Entfeuchtungskühlung.
- Regelbarkeit der Fördergeschwindigkeit des Verkleisterungsprodukts und Anpassbarkeit der Maschinenleistung.
- Schnelle Austauschbarkeit der Arbeitsorgane der Pumpe 42 ohne Produktionsstopp.
- Automatische portionsweise Dosierung des Verkleisterungsprodukts für Teigknetung.
- Verminderung der Klebrigkeit und Erhaltung der Flüssigkeit des Verkleisterungsprodukts für seine homogene Verteilung in der gemischten Teigmasse. Das ermöglicht, die Klebrigkeit der Teigstücke und entsprechende Probleme beim Formen, Absetzen, Garen und Backen der Teigstücke bei Grenzwassergehalt der Teige zu vermeiden.
- Feine Verteilung des rezepturmäßigen Öls in der Mikrostruktur des Verkleisterungsprodukts und des Teigs und dadurch vollständige Beseitigung der Klebrigkeit, Verbesserung der Struktur und der Elastizität der Krume und gleichzeitig erhöhte Feuchtigkeit, verlängerte Frischhaltung und verbesserter Geschmack der Fertigwaren.

Im Ergebnis entsteht ein flüssiges, feindisperses und homogenes Verkleisterungsprodukt für die Teigknetung. Dieses Verkleisterungsprodukt enthält eine optimale Menge von hydrophilem Kolloid, reduzierten Zuckern, enzymatischen Behandlungsprodukten, verfestigtem Kleber sowie fein verteiltes rezepturmäßiges Öl. Flüssigkeit und Homogenität des Verkleisterungsprodukts ermöglichen, es gleichmäßig in der gemischten Teigmasse zu verteilen.

Die Einführung des erfindungsgemäßen Verkleisterungsprodukts in den Teig stellen eine optimale Gärung, Verstärkung der Struktur und stabile Formhaltung des Teigs bei Grenzfeuchtigkeitswerten, eine lange Frischhaltung und Erhaltung der Geschmackseigenschaften der Krume bei Fertigwaren sicher.

Die Beispiele für die Prozessführung im Zusammenhang mit der Herstellung der Verkleisterungsprodukte, der Teige und der Fertigwaren, z. B. des Schnittweißbrots, nach dem Prototypverfahren und nach dem beanspruchten Verfahren sind folgenden Tabellen zu entnehmen:
Tabelle 1. Vergleichsangaben zu den Verfahren und Einrichtungen zur Herstellung des Verkleisterungsprodukts;
Tabelle 2. Herstellungsbeispiele für das Verkleisterungsprodukt nach dem Prototypverfahren und nach dem beanspruchten Verfahren;
Tabelle 3. Beispiele für ein Aufgeben des Verkleisterungsprodukts, Mischen der Teige und Eigenschaften des Schnittweißbrots gebacken nach einem üblichen Verfahren und unter Anwendung des Verkleisterungsprodukts, welches nach dem Prototypverfahren und nach dem beanspruchten Verfahren hergestellt wurde.

Die Angaben in den Tabellen lassen auf Folgendes rückschließen:
- Die Beheizung des Mehldosierers und des Einspeisekanals ermöglicht, die Mehltemperatur innerhalb von 40 ± 5 °C und die Heißwassertemperatur innerhalb von 65 ± 5 °C aufrechtzuerhalten.
- Die Führung des primären Kontakts zwischen Trockenmehl und Heißwasser in Bemessungsverhältnissen unter Bildung und nachfolgendem Scheren der Primärmassen in die gemeinsame Anfangsbrühmasse (P. 3 Tabelle 1) sorgt dafür, dass ein Verkleisterungsprodukt mit einer berechneten Feuchtigkeit, Klebrigkeit und Konsistenz (PP. 10, 13, 14 Tabelle 2) entsteht. Dieses Verkleisterungsprodukt enthält die erforderliche Menge an Kolloid. Dadurch wird es möglich, den benötigten Anteil des zu verkleisternden Mehls (P. 2 Tabelle 2) und dementsprechend die Masse der Verkleisterungsproduktportion (P. 1 Tabelle 3) zu vermindern, wobei maximale Effekte hinsichtlich der Teigfeuchtigkeit und Frischhaltungsdauer der Krume der Fertigwaren erreicht werden (s. PP. 5, 7 Tabelle 3).
- Die Trennung der heißen Primärmisch- und -brühzone von dem übrigen belüfteten Raum des Knetbottichs 3 und die Bodenbeheizung erlauben es, die Temperatur der Anfangsbrühmasse von 61 ± 1 °C und somit die erforderliche vollständige Verkleisterung aufrechtzuerhalten, wobei die Heißwassertemperatur von 90 ± 5 °C (nach dem Prototypverfahren) auf 65 ± 5 °C (nach dem beanspruchten Verfahren) gebracht wird (P. 7 Tabelle 2). Das wirkt sich positiv auf die Verminderung der Klebrigkeit des hergestellten Verkleisterungsprodukts aus. Die Erhaltungsdauer der Oberflächenklebrigkeit des Verkleisterungsprodukts wurde kürzer: 180 Sek. (nach dem Prototypverfahren) gegen 10 Sek. (nach dem beanspruchten Verfahren) (P. 14 Tabelle 2). Die Konsistenz der Mischmasse im Knetbottich 3 wurde fester (P. 10 Tabelle 2).
- Die Isolierung der Heißzone sowie die unten liegende Entladung der Anfangsbrühmasse aus der Heißzone ermöglichen, den Mehlstaubdurchbruch völlig zu vermeiden, auf den Staubfänger zu verzichten und insgesamt die lufttechnische Anlage im Vergleich zum Prototypverfahren zu vereinfachen (P. 6 Tabelle 1).

- Die leichte Querbeblasung mit Frischluft und der freie Austritt der Abluft ermöglichen, die benötigte Entfeuchtungskühlungseffizienz zu erreichen (darunter auch dank der Vergrößerung der spezifischen Oberfläche der dickflüssigen im Knetbottich 3 vermischten und belüfteten Masse). Bei der 6-fachen Leistungssenkung des Ventilators und der Verminderung der Menge an lufttechnischen Elementen um das 3-fache (P. 6 Tabelle 1) wurden die Verdampfungsverluste 2mal höher (P. 12 Tabelle 2), und die Massentemperatur fiel um 4 °C (P. 11 Tabelle 2).
- Die Einführung des rezepturmäßigen Öls in die heiße Anfangsbrühmasse, die nachher in das Verkleisterungsprodukt (s. P. 4 Tabelle 1) verwandelt wird, welches bis zu seiner Aufgabe für die Teigknetung kräftig vermischt wird, ermöglicht es, homogene Dispergierung und feine Verteilung des Öls zuerst im Verkleisterungsprodukt und dann in der Teigstruktur zu erreichen. Dadurch wird eine feine, mikroporige und äußerst elastische Krumenstruktur bei Weißbroten sichergestellt, die über die gesamte Verbrauchsdauer erhalten bleibt. Zugleich ist ihre Klebrigkeit ausgeschlossen und die Aroma- und Geschmackseigenschaften werden verbessert. Die Teigfeuchtigkeit steigt um 2 % gegenüber dem Prototyp (P. 5 Tabelle 3), und die Frischhaltungsdauer verlängert sich um 6 Stunden (P. 7 Tabelle 3).
- Die niedrigere Heißwassertemperatur (P. 6 Tabelle 2) und die Einführung des rezepturmäßigen Pflanzenöls in das Verkleisterungsprodukt ermöglichen, die Klebrigkeit des Teigs völlig zu vermeiden (P. 4 Tabelle 3). Somit werden die Probleme im Zusammenhang mit dem Formen der Teigstücke bei erhöhter Feuchtigkeit beseitigt. Die maximale Feuchtigkeit der Weißbrotteige wurde bis auf 42,5 % erhöht im Vergleich zu 40,5 % beim Prototypverfahren und zu 39,5 % bei konventionellen Verfahren (P. 5 Tabelle 3). Gleichzeitig wurde die Frischhaltungsdauer auf 26 Stunden verlängert (P. 7 Tabelle 3).

### Literatur

1. Patent RU 2242126, C2, M. Kl² A21 D 8/02, 2002.
2. Patent RU2375874, C2, M. Kl² A 21D 8/02, 2008.

### Vergleichsangaben zu den Verfahren und Einrichtungen zur Herstellung des Verkleisterungsprodukts

**Tabelle 1**

| Nr. | Verfahrensschritte und Systeme | Nach dem Prototypverfahren | Nach dem beanspruchten Verfahren | Hauptziele des beanspruchten Verfahrens |
|---|---|---|---|---|
| 1. | Mehlzufuhr zum Brühen | Das Mehl wird in die kalte zu vermischende Brühstücksmasse ungleichmäßig geschüttet. | Strahlenartiges Fließen des Mehls über einen polierten Kanal, den Mehlfluss ist auf die Kontaktstelle auf dem sauberen Boden ausgerichtet. | Erreichen der Bemessungsverhältnisse zwischen Mehl und Wasser und der erforderlichen Qualität des hergestellten Verkleisterungsprodukts. |
| 2. | Heißwasserzufuhr zum Brühen | Das Wasser fließt aus dem Rohr an der Wand (des Knetbottichs) in die kalte zu vermischende Masse. | Das Wasser wird in einem ausgerichteten Strahl der Kontaktstelle mit Trockenmehl zugeführt. | |
| 3. | Bildung der Primärbrühmasse | Vermischen von Heißwasser mit der vorher gebildeten Masse und dann mit dem eingehenden Mehl. | Primärkontakt zwischen Trockenmehl und Heißwasser in Bemessungsverhältnissen; Verschiebung der entstehenden Primärmassen zur gemeinsamen Brühmasse. | Herstellung des Verkleisterungsprodukts mit maximalem Stärkekolloidsgehalt und minimalen Schleimen. |
| 4. | System der rezepturmäßigen Ölzufuhr | Aufgabe mit den übrigen Zutaten vor dem Teigkneten. | Aufgabe ins heiße Verkleisterungsprodukt, das in der Verkleisterungsmaschine vermischt wird. | Vermeidung der Klebrigkeit, Erhöhung der Teigfeuchtigkeit und der Frischhaltungsdauer. |
| 5. | Primärmisch- und -brühzone | Im gemeinsamen Raum des belüfteten Knetbottichs. | Die Zone ist vom gemeinsamen Raum getrennt und mit Wärmeisolierung und einem Schauglas im Deckel versehen. | Senkung der Heißwassertemperatur und Klebrigkeit. Vermeidung der Staubbildung. |
| 6. | Belüftungssystem | - Längsläufig, geschlos- | - Querläufig, offen | Vereinfachung der Konstruktion, kleinere Abmessungen, Nutzeffektssteigerung Entfeuchtungskühlung. |
| | | sen; | - umfasst 3 Elemente an der Maschine; Staubfänger entfällt | |
| | | - umfasst 7 Elemente an der Maschine sowie einen eigenständigen Ventilator und einen Staubfänger; | | |
| | | | - Leistung des Ventilators 0,25 kW | |
| | | - Leistung des Ventilators 1,5 kW. | | |
| 7. | Auslaufstation der Maschine | Extrudierschnecke mit fester Kapazität. | - Auslaufbunker; | Schnelle Anpassbarkeit der Kapazität und Austauschbarkeit des Werkzeuges. |
| | | | - Schraubenpumpe mit regelbarer Förderung; | |
| | | | - schnellentkoppelbarer schwenkbarer Bogen; | |
| 8. | Speicherungssystem und portionsweise Dosierung beim Teigkneten | - Speicherbottich; | - Speicherdosierer; | - Einstellung der Ge- |
| | | - Manuelle Dosierung in Messbehälter und manuelles Beschicken in Bottich vor dem Kneten. | - Automatische Aufgabe der dosierten Menge des beweglichen Verkleisterungsprodukts in die feuchte Masse beim kontinuierlichen Mischen. | schwindigkeit und der Aufgabedauer bei dosierter Menge. |
| | | | | - Homogene Verteilung des Verkleisterungsprodukts in der gemischten Teiqmasse |

### Beispiele für industrielle Herstellung und Dosierung des Verkleisterungsprodukts nach dem Prototypverfahren und nach dem beanspruchten Verfahren

**Tabelle 2**

| Nr. | **Eigenschaften** | **Nach dem Prototypverfahren (ohne Öl)** | **Nach dem beanspruchten Verfahren** | |
|---|---|---|---|---|
| | | | **ohne Öl** | **mit Ölzuführung dem heißen Verkleisterungsprodukt** |
| 1. | Proben des hergestellten Verkleisterungsprodukts | I | II | III |
| 2. | Anteil des zu verkleisternden Mehls in Gesamtmenge des rezepturmäßigen Mehls | 15% | 12 - 13 % | 12 - 13 % |
| 3. | Mehlleistung der Verkleisterungsmaschine in kg/Min. | 1,0 | 1,0 | 1,0 |
| 4. | Heißwasserdosierung in Anteilen pro 1 Teil Mehl | 1,2 | 1,4 | 1,4 |
| 5. | Gesamttemperatur Mehl plus Heißwasser | 107 ± 3 °C | 107 ± 3°C | 107 ± 3°C |
| 6. | Temperatur des Mehls zur Verkleisterung | 20 ± 5 °C | 40 ± 5 °C | 40 ± 5°C |
| 7. | Heißwassertemperatur | 90 ± 5 °C | 65 ± 5 °C | 65 ± 5 °C |
| 8. | Temperatur der Anfangsbrühmasse | 56 ± 1 °C | 61 ± 1 °C | 61 ± 1 °C |
| 9. | Feuchtigkeit der Anfangsbrühmasse, | 57 ± 1 % | 59 ± 1 % | 61 ± 1 % |
| 10. | Konsistenz des Verkleisterungsprodukts, gemischt im Knetbottich | Dicke Masse, die durch Schaufeln geschnitten wird | Feste Massenstränge, die mit Schaufeln spiralförmig verschoben werden | |
| 11. | Temperatur des Verkleisterungsprodukts am Auslauf des Knetbottichs, der Maschine | 36 ± 2 °C | 32 ± 2 °C | 32 ± 2 °C |
| 12. | Feuchteverluste beim Durchlauf des Knetbottichs | 3-5 % | 8 - 10% | 8-10% |
| 13. | Feuchtigkeit des Verkleisterungsprodukts am Auslauf des Knetbottichs, der Maschine | 50 ± 1 % | 58 ± 1 % | 60 ± 1 % |
| 14. | Erhaltungsdauer der Oberflächenklebrigkeit des Verkleisterungsprodukts beim andauernden Ruhezustand | 150-180 Sek. | 20 -30 Sek. | 5 -10 Sek. |
| 15. | Masse des Verkleisterungsprodukts, aufgegeben zum Teiqkneten | 32 kg | 29 kg | 33 kg |
| 16. | Einrichtung zur Sammlung und Dosierung des Verkleisterungsprodukts | Speichertrog, Messbehälter | Speicherdosierer, Zeitgeber | |
| 17. | Konsistenz und Aufgabeverhalten des Verkleisterungsprodukts | Zähe Masse, Einmalaufgabe als Gesamtmasse | Fließende Masse wird in der zu knetenden Masse gleichmäßig verteilt | |
| 18 | Verfahren zur Dosierung des Verkleisterungsprodukts für Teigknetung | Manuelle Aufgabe mit Messbechern vor dem Teigkneten | Automatische Beschickung mit einer Schraubenpumpe bei laufender Maschine mit Vor- und endgültigem Durchmischen | |

### Beispiele für Mischen der Teige und Eigenschaften des Schnittweißbrots gebacken nach einem üblichen Verfahren und unter Anwendung des Verkleisterungsprodukts nach dem Prototypverfahren und nach dem beanspruchten Verfahren

**Tabelle 3**

| **Nr.** | **Eigenschaften** | **Konventionelles Verfahren /Öl in den Teig /** | **Nach dem Prototypverfahren / Öl in den Teig /** | **Nach dem beanspruchten Verfahren** | |
|---|---|---|---|---|---|
| | | | | **Öl in den Teig** | **Öl ins Verkleisterungsprodukt** |
| 1. | Proben und Masse des Verkleisterungsprodukts, aufgegeben zum Teigkneten | - | I | II | III |
| | | | 32 kg | 29 kg | 33 kg |
| 2. | Beschickungszeit, Verkleisterungsprodukt | - | 3 Min. | - | - |
| 3. | Teigknetungsdauer | 12 Min. | 9 Min. | 12 Min. | 12 Min. |
| 4. | Erhaltungsdauer der Teigoberflächenklebrigkeit nach dem Kneten | 20 ± 5 Sek. | 15 ± 5 Sek. | 5 ± 2 Sek. | Keine Klebrigkeit |
| 5. | Feuchtigkeit des Teiges beim normalen Volumen und Form der Erzeugnisse | 39,0-39,5 % | 40,0-40,5 % | 41,0-41,5% | 42,0-42,5 % |
| 6. | Ausbeute | 139 ± 1 kg | 141 ± 1 kg | 144 ± 1 kg | 146 ± 1 kg |
| 7. | Erhaltungsdauer der Anfangsfrische, -Weichheit, - Aromas und -Geschmacks der Krume | 8 ± 2 Stunden | 20 ± 2 Stunden | 24 ± 2 Stunden | 40 ± 2 Stunden |

## Patentansprüche

1. Verfahren zur kontinuierlichen Herstellung und portionsweisen Dosierung eines Mehlverkleisterungsprodukts für eine Brotteigknetung , wobei:
- die Bildung einer Anfangsbrühmasse mit einer Solltemperatur zwischen 61±1°C in einem Knetbottich durch kontinuierliche Zuführung von 10-20 % des rezepturgemäßen Mehls und Mischung mit Heißwasser in einem Mehl-Wasser-Verhältnis zwischen 1,0:1,0 und 1,0:1,4 in einer Heißzone des Knetbottichs vorgesehen ist,
- das Heißwasser der Heißzone kontinuierlich zugeführt wird,
- das Heißwasser innerhalb von 65±5°C aufrechterhalten wird,
- das Mehl über einen Mehleinspeisekanal kontinuierlich der Heißzone zugeführt wird,
- die Temperatur des aufzubrühenden Mehls innerhalb von 40±5°C aufrechterhalten wird,
- der Mehleinspeisekanal mit einer Heizung versehen ist,
- die Knetbottichwände und der -boden über die Länge der Heißzone mit einer Heizung versehen sind,
- Mehl und Heißwasser in Form von zu einem Sollpunkt des primären Kontakts zum primären Mischen und Brühen gerichteten Strahlen aufgegeben werden,
- die Strahlen im Sollpunkt des primären Kontakts in einem trockenen Bereich des beheizten Knetbottichbodens zusammentreffen,
- die kontinuierlich entstehenden Primärbrühmassen vom Kontaktpunkt zum gemeinsamen Kern der Anfangsbrühmasse hin gebracht und danach in der Heißzone durchgemischt werden, bis ein homogener Zustand erreicht wird, wobei die Solltemperatur aufrechterhalten wird
- die durchgemischte Anfangsbrühmasse aus der Heißzone in einen belüfteten Bereich des Knetbottichs gefördert wird,
- eine rezepturmäßige Ölmenge am Austritt in den belüfteten Knetbottichbereich kontinuierlich in die Anfangsbrühmasse dosiert wird,
- die vermischte Brühmasse mit einer Querluftströmung belüftet wird,
- das fertige Mehlverkleisterungsprodukt einer Teigknetung zugeführt wird, wobei eine portionsweise Dosierung des kontinuierlich zugeführte Verkleisterungsprodukt mit Hilfe eines Speicherdosierers erfolgt,
- die berechnete Solldosierung des Verkleisterungsprodukts aus dem Speicherdosierer in die feuchte kontinuierlich gemischte Masse des Vorteigs kommt, und
danach das gesamte Mehl und die Restzutaten aufgegeben werden und der Teig endgültig geknetet wird.

## Claims

1. A method for continuous production and metered dispensing of portions of a flour agglutination product for kneading bread dough, wherein:
- the formation of an initial choux paste at a desired temperature between 61±1 °C in a kneading bowl is provided by continuously delivering 10-20 % of the flour according to the recipe and mixing with hot water in the flour and water ratio between 1.0:1.0 and 1.0:1.4 in a hot zone of the kneading bowl,
- the hot water is supplied continuously to the hot zone,
- the hot water is maintained within a range of 65±5 °C,
- the flour is supplied to the hot zone continuously via a flour introduction conduit,
- the temperature of the flour that is to be risen is kept within 40±5 °C,
- the flour introduction conduit is provided with a heater,
- the walls and base of the kneading bowl are provided with a heater over the length of the hot zone,
- flour and hot water are added in the form of streams aimed at a desired point of the
primary contact for the primary mixing and rising,
- the streams meet at the desired point of the primary contact in a dry region of the heated
base of the kneading bowl,
- the primary choux pastes that are continually being created are brought from the contact point to the common core of the initial choux paste and after that are thoroughly mixed in a hot zone until a homogeneous state is attained, and the desired temperature is maintained,
- the thoroughly mixed initial choux paste is fed from the hot zone into a ventilated region
of the kneading bowl,
- at the outlet into the ventilated kneading bowl, an amount of oil specified by the recipe is dispensed in metered fashion continuously into the initial choux paste,
- the mixed choux paste is ventilated with a transverse flow of air,
- the finished flour agglutination product is supplied to a dough kneader, and
portions of the continuously supplied agglutination product are dispensed in metered fashion with the aid of a storage-type dosing device,
- the calculated desired dosage of the agglutination product moves out of the storage-type dosing device into the damp, continuously mixed mass of the yeast sponge, and
after that, all of the flour and the remaining ingredients are added, and the dough is given a final kneading.

## Revendications

1. - Procédure de production continue et de dosage par portions d'un produit de prégélatinisation de farine de malaxage de pâte à pain, de sorte que
- la formation d'une masse d'essai initiale avec une température de consigne entre 61+-1C est prévue dans une cuve de malaxage par le biais de l'apport continu de 10-20 % de la farine selon la formulation et du mélange avec de l'eau chaude dans un rapport farine-eau entre 1,0 :1,0 et 1,0 :1,4 dans une zone de chaleur de la cuve de malaxage,
- l'eau chaude est alimentée dans la zone chaude,
- l'eau chaude est maintenue sous la température 65+-5C,
- la farine est alimentée continuellement via un canal d'alimentation de farine,
- la température de la farine bouillie est maintenue à 40+-5C,
- le canal d'alimentation de la farine est muni d'un radiateur,
- les parois de la cuve de malaxage et le fond sont munis d'un radiateur tout au long de la zone chaude,
- la farine et l'eau chaude sont arrêtées sous forme de rayons orientés du point de consigne du contact primaire au mélange et échaudage primaires,
- les rayons se réunissent au point de consigne du contact primaire dans une zone sèche du fond de la cuve de malaxage chauffée,
- les masses d'échaudage naissant continuellement du point de contact jusqu'au noyau commun de la masse d'essai initiale sont mélangées ensuite à l'intérieur de la zone chaude obtenant ainsi un état homogène de sorte que la température de consigne est maintenue,
- la masse d'essai initiale mélangée à partir de la zone chaude est extractée dans une zone aérée de la cuve de malaxage,
- une quantité d'huile selon la formulation à la sortie de la zone aérée de la cuve de malaxage est dosée continuellement dans la masse d'essai initiale,
- la masse d'essai mélangée est aérée à l'aide d'un écoulement d'aération transversale,
- le produit de prégélatinisation de farine prêt est soumis au pétrissage de sorte qu'un dosage par portions du produit de prégélatinisation continuellement apporté a lieu avec l'aide d'un doseur à mémoire,
- le dosage de consigne calculé du produit de prégélatinisation quitte le doseur à mémoire et se place dans la masse mélangée continuellement humide du levain et qu'ensuite la farine entière et les autres ingrédients contribuent définitivement au pétrissage de la pâte.
